# EUROPÄISCHE PATENTSCHRIFT

(11) **EP 3 381 711 B1**
(45) Veröffentlichungstag und Bekanntmachung des Hinweises auf die Patenterteilung: **11.12.2019**
(21) Anmeldenummer: 18153803.4
(22) Anmeldetag: 29.01.2018
(51) Int. Cl.: B60B 17/00

(54) **GUMMIGEFEDERTES SCHIENENFAHRZEUGRAD**
RAILWAY VEHICLE WHEEL WITH RUBBER SUSPENSION
ROUE ÉLASTIQUE CAOUTCHOUTÉE POUR VÉHICULE SUR RAILS

(30) Priorität: 30.03.2017 DE 102017205461
(43) Veröffentlichungstag der Anmeldung: 03.10.2018
(73) Patentinhaber: ContiTech Vibration Control GmbH, 30165 Hannover (DE)
(72) Erfinder: Reich-Albrecht, Stefan, 31515 Wunstorf (DE); Narberhaus, Stefan, 30826 Garbsen (DE); Scherrens, Henri, 30855 Langenhagen (DE); Hartke, Werner, 3017 Pattensen (DE)
(74) Vertreter: Preusser, Andrea

(56) Entgegenhaltungen:
- DE-A1- 10 115 370
- DE-C2- 19 633 597
- US-A- 4 212 491

## Beschreibung

Die Erfindung betrifft ein gummigefedertes Schienenfahrzeugrad, aufweisend eine Strombrücke aus Metall und eine elastische Schicht zwischen dem Radreifen aus Metall und der Radscheibe aus Metall.

Gummigefederte Schienenfahrzeugräder, oft auch lediglich als gummigefederte Schienenräder bezeichnet, sind hinreichend z. Bsp. aus WO2007/003591A1, DE 102005040521B4 oder EP0733493B1, bekannt. Die Gummifederung zwischen Radreifen und Radscheibe dient vor allem dem Lärmschutz durch Absorption von Körperschall, dem Stoßabbau, der Verringerung des Rad- und Schienenverschleißes durch die elastische Bettung des Radreifens, so dass lediglich der Radreifen am Ende seiner Lebenszeit ausgetauscht werden muss.

Bei der Gummifederung handelt es sich um eine elastische Einlage bzw. Schicht zwischen dem zumeist stählernen Radreifen und der zumeist stählernen Radscheibe. Sie besteht aus einer Reihe einzelner Gummielemente oder Ringelemente mit definierten Eigenschaften hinsichtlich Federung und Dämpfung.

Bei elektrisch betriebenen Fahrzeugen erfolgt die Energieversorgung durch den Strom, der zwischen den beiden Polen Oberleitung und Schiene fließt. Hier wirkt die elastische Gummischicht bzw. Gummieinlage derart elektrisch isolierend, dass die volle Stromleistung die Schiene in der Regel nicht erreicht. Dies macht eine so genannte Strombrücke, meist aus Kupfer, notwendig, siehe bspw. DE 19633597C2 oder EP0074128B1.

Der elektrische Strom wird allerdings weiterhin über die elastische Gummischicht bzw. die elastische Gummieinlage und über die Strombrücke abgeleitet. Bei Überspannung besteht daher die Gefahr, dass die die elastische Gummischicht bzw. die elastische Gummieinlage durch Überhitzung beschädigt wird.

Eine Aufgabe der vorliegenden Erfindung ist es daher, eine elastische Gummischicht bzw. eine elastische Gummieinlage für ein gummigefedertes Schienenfahrzeugrad bereitzustellen, das sich durch eine verbesserte elektrische Isolierung auszeichnet, so dass die beim Betrieb anfallenden elektrischen Ströme nur noch durch die Strombrücke abgeleitet werden. Die zur Federung und Dämpfung notwendigen physikalischen Eigenschaften sollen dabei nicht schlechter werden, insbesondere die radialen und axialen Federsteifigkeiten. Des Weiteren muss die elastische Gummischicht bzw. die elastische Gummieinlage die neue Brandschutznorm DIN EN 45545-2 "Bahnanwendungen-Brandschutz in Schienenfahrzeugen - Teil 2: Anforderungen an das Brandverhalten von Werkstoffen und Komponenten" erfüllen.

Gelöst wird diese Aufgabe dadurch, dass die elastische Gummischicht bzw. die elastische Gummieinlage des Schienenfahrzeugrades aus einer Kautschukmischung aufgebaut ist, welche wenigstens folgenden Bestandteile enthält:
- 80 bis 100 phr wenigstens eines Naturkautschuks (NR), und
- wenigstens eine Kieselsäure und
- wenigstens ein Silan und
- 20 bis 90 phr Zinkoxid (ZnO).

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Folgende Begriffe werden in dieser Schrift synonym verwendet:
Schienenfahrzeugrad ⇔ Schienenrad
Elastische Gummischicht ⇔ elastische Gummieinlage
Elastomermischung ⇔ Kautschukmischung ⇔ Gummimischung
Isolierung ⇔ elektrische Isolierung

Überraschenderweise wurde gefunden, dass sich nur durch eine Kombination von Kieselsäure, Silan und einer vergleichsweise großen Menge an ZnO eine gute elektrische Isolierung ergibt bei gleichbleibenden Feder- und Dämpfungseigenschaften.

Die elastische Gummischicht kann entweder aus einem durchgängigen elastischen Ring bestehen, der zwischen dem Radreifen und der Radscheibe eingespannt ist. In der Regel wird es sich bei der elastischen Gummischicht um einzelne Segmente handeln, die bei der Herstellung des Schienenrades zwischen dem Radreifen und der Radscheine eingelegt werden. Zwischen den einzelnen Segmenten befindet sich dann ein Hohlraum, der für den jeweiligen Verwendungszweck ausreichend bemessen ist. Durch die Hohlräume können die erforderlichen Formänderungen bei Beanspruchungen und auch eine gute Abführung der Walkwärme infolge Turbokühlung gewährleistet werden. Zudem wird der Abreieb unter den einzelnen Segmenten vermieden.

Die elastische Gummischicht ist aus einer Kautschukmischung aufgebaut.

Die Kautschukmischung enthält erfindungsgemäß 80 bis 100 phr Naturkautschuk (NR). Naturkautschuk bietet neben den besonders guten Dämpfungs- und Federungseigenschaften eine geringe Setzung unter Last. Hierdurch bleibt die Vorspannung zwischen Radreifen und Radscheibe über einen sehr langen Zeitraum erhalten.

Des Weiteren kann die Kautschukmischung noch 0 bis 20 phr wenigstens eines weiteren Kautschuks enthalten. Hierbei kann es sich um Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Polyurethan (PU) handeln, die jeweils alleine oder in Kombination vorhanden sein können.

In einer bevorzugten Ausführungsform ist die Kautschukmischung der elastischen Gummischicht frei von thermoplastischen Elastomeren (TPE) und frei von Thermoplasten (TP), d.h. die Menge an TPE und TP beträgt bevorzugt 0 phr.

Erfindungswesentlich ist die Kombination aus Kieselsäure, Silan und Zinkoxid.

Als Silan können dabei alle der fachkundigen Person für die Verwendung in Kautschukmischungen bekannten verwendet werden. Silane werden häufig auch als siliziumorganische Verbindung bezeichnet. Es kann ein Silan alleine verwendet werden, aber auch eine Kombination von zwei oder mehr Silanen ist möglich. Die Gesamtmenge an Silan beträgt bevorzugt 1 bis 15 phr, besonders bevorzugt 1 bis 10 phr und ganz besonders bevorzugt 2 bis 7 phr. Bevorzugt werden schwefelhaltige Silane, wie bspw. Bis(triethoxysilylpropyl)disulfid (TESPD) und Bis(triethoxysilylpropyl)tetrasulfid (TESPT), da diese bedingt durch eine zusätzliche kovalente Verbindung zwischen Füllstoff und Polymer das chemische Netzwerk verstärken und so zusätzlich die physikalischen Eigenschaften der Mischung verbessern können. Möglich ist aber auch der Einsatz von so genannten Mercaptosilanen und hierbei insbesondere solche, welche sich durch eine Reduzierung der leicht flüchtigen organischen Bestandteile auszeichnen.

Kieselsäuren werden häufig auch als helle Füllstoffe oder als "white carbon black" bezeichnet. Die in der Kautschukindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Erfindungsgemäß werden Kieselsäuren mit einer Stickstoff-Oberfläche größer oder gleich 50 m²/g, bevorzugt zwischen 50 und 320 m²/g, besonders bevorzugt zwischen 100 und 250 m²/g, und einer CTAB-Oberfläche zwischen 50 und 300 m²/g, bevorzugt zwischen 50 und 250 m²/g und besonders bevorzugt zwischen 80 und 250 m²/g, eingesetzt.

Besonders gute Ergebnisse lassen sich erzielen, wenn die BET-Oberfläche der Kieselsäure zwischen 150 und 200 m²/g beträgt.

Die Menge der Kieselsäure beträgt bevorzugt 20 bis 100 phr, besonders bevorzugt 30 bis 80 phr und ganz besonders bevorzugt 40 bis 60 phr.

Als weiteren wesentlichen Mischungsbestandteil enthält die Kautschukmischung zusätzlich Zinkoxid. Das Zinkoxid hat nicht nur einen positiven Einfluss auf die elastischen Eigenschaften, sondern auch auf die Alterungsbeständigkeit und auf die Wärmeleitfähigkeit der Mischung. Es können alle der fachkundigen Person bekannten Zinkoxidtypen alleine oder in Kombination eingesetzt werden.

Die Menge an Zinkoxid beträgt 20 bis 90 phr, bevorzugt 40 bis 80 phr.

Des Weiteren kann die Kautschukmischung wenigstens einen Ruß enthalten.

Bevorzugt beträgt die Menge an Ruß 5 bis 50, besonders bevorzugt 5 bis 40 phr. Bevorzugt werden Ruße verwendet, die eine Iodzahl gemäß ASTM D 1510, die auch als Iodabsorptionszahl bezeichnet wird, zwischen 5 und 20 g / kg und eine DBP-Zahl, zwischen 25 und 70 cm³ / 100g besitzen. Die DBP-Zahl gemäß ASTM D 2414 bestimmt das spezifische Absorptionsvolumen eines Rußes oder eines hellen Füllstoffes mittels Dibutylphthalat. Dies bedeutet, dass bevorzugt Ruße mit der Kennung N-9xx verwendet werden. Die Kennung der Ruße erfolgt gemäß der Klassifizierungstabelle der ASTM D 1765-13. Ruße der N-9xx-Reihe, insbesondere der Rußtyp N990, zeigen besonders gute Eigenschaften.

Die Kautschukmischung kann neben Kieselsäure und Ruß auch noch weitere Füllstoffe wie Aluminiumhydroxid, Schichtsilikate, Kalk, Kreide, Stärke, Magnesiumoxid, Titandioxid, Kautschukgele, Kurzfasern usw. in beliebigen Kombinationen enthalten.

Weiterhin enthält die Kautschukmischung noch weitere Zusatzstoffe.

Weitere Zusatzstoffe beinhaltet im Wesentlichen das Vernetzungssystem (Vernetzer, Schwefelspender und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 bis 80 phr.

Die Erfindung soll nun anhand von Vergleichs- und Ausführungsbeispielen, die in den Tabellen 1a, 1b und 1c zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

In Tabelle 1a ist dabei die Mischungszusammensetzung dargestellt, während in Tabelle 1b die dazugehörigen entsprechenden physikalischen Eigenschaften bei Raumtemperatur und in Tabelle 1c die dazugehörigen physikalischen Eigenschaften bei einer Alterung für 168h bei 70°C illustriert sind.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

**Tabelle 1a**

| **Bestandteile** | **Einheit** | **V1** | **V2** | **E1** |
|---|---|---|---|---|
| NR | phr | 100 | 100 | 100 |
| Kieselsäure, VN3, Fa. Evonik | phr | 0 | 34 | 53 |
| Silan, TESPT | phr | 0 | 0 | 5,20 |
| Ruß, N990 | phr | 0 | 70 | 30 |
| Ruß, N339 | phr | 64,3 | 0 | 0 |
| ZnO | phr | 10 | 60 | 60 |
| Zusatzsstoffe* | phr | 10 | 10 | 10 |
| Schwefel | phr | 1,26 | 1,26 | 1,26 |

| | | | | |
|---|---|---|---|---|
| *Alterungssschutz, Ozonschutz, Stearinsäure, Vulkanisationsbeschleuniger, Vulkanisationsverzögerer | | | | |

**Tabelle 1b**

| | **Einheit** | **V1** | **V2** | **E1** |
|---|---|---|---|---|
| Härte DIN 53505 | Shore A | 82 | 79 | 80 |
| Durchgangswiderstand ISO 1853 | Ωxcm | 2,6^{∗}E02/1V | >10^{∗}E10/300V | >10^{∗}E10/300V |
| Oberflächenwiderstand ISO 1853 | Ω | 2,6^{∗}E03/0,1V | >10^{∗}E10/300V | >10^{∗}E10/300V |
| Reißdehnung ISO37 | % | 291 | 502 | 254 |
| Reißfestigkeit ISO37 | N/mm² | 21 | 19 | 17 |
| Spannwert 100% ISO37 | | 6 | 5 | 3 |

**Tabelle 1c**

| | **Einheit** | **V1** | **V2** | **E1** |
|---|---|---|---|---|
| Härte DIN 53505 | Shore A | 83 | 84 | 82 |
| Reißdehnung ISO37 | % | 272 | 439 | 221 |
| Reißfestigkeit ISO37 | N/mm² | 22 | 19 | 17 |

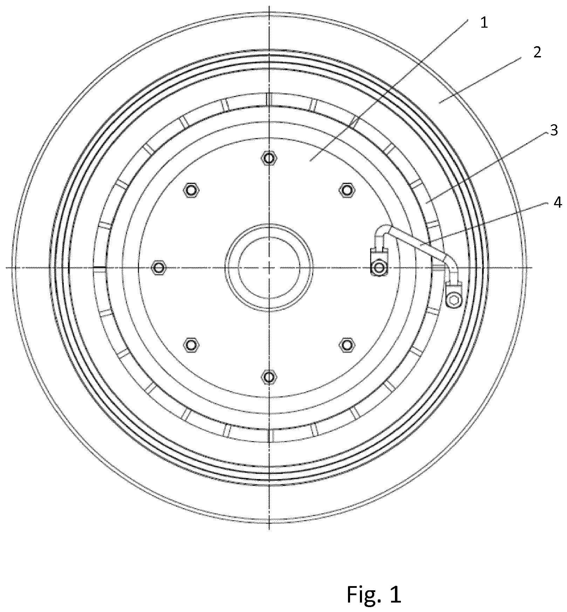

Fig. 1 zeigt ein erfindungsgemäßes gummigefedertes Schienenfahrzeugrad mit einer Strombrücke aus Metall 4 und einer aus einzelnen Segmenten aufgebauten elastischen Schicht 3, die aus der erfindungsgemäßen Kautschukmischung aufgebaut ist und die sich zwischen dem Radreifen 2 aus Metall und der Radscheibe 1 aus Metall befindet.

## Patentansprüche

1. Gummigefedertes Schienenfahrzeugrad, aufweisend eine Strombrücke aus Metall und eine elastische Schicht zwischen dem Radreifen aus Metall und der Radscheibe aus Metall, **dadurch gekennzeichnet, dass** die elastische Schicht aus einer Kautschukmischung aufgebaut ist, welche wenigstens folgenden Bestandteile enthält:
- 80 bis 100 phr wenigstens eines Naturkautschuks (NR), und
- wenigstens eine Kieselsäure und
- wenigstens ein Silan und
- 20 bis 90 phr Zinkoxid (ZnO).

2. Gummigefedertes Schienenfahrzeugrad nach Anspruch 1, **dadurch**
**gekennzeichnet, dass** die Kautschukmischung 20 bis 100 phr wenigstens einer Kieselsäure enthält.

3. Gummigefedertes Schienenfahrzeugrad nach Anspruch 1 oder 2, **dadurch**
**gekennzeichnet, dass** die Kautschukmischung 10 bis 15 phr wenigstens eines Silans enthält.

4. Gummigefedertes Schienenfahrzeugrad nach einem der Ansprüche 1 bis 3,
**dadurch gekennzeichnet, dass** die Kautschukmischung zusätzlich wenigstens einen Ruß enthält.

5. Gummigefedertes Schienenfahrzeugrad nach einem der Ansprüche 1 bis 3,
**dadurch gekennzeichnet, dass** die Menge an Ruß zwischen 5 und 50 phr Ruß beträgt.

6. Gummigefedertes Schienenfahrzeugrad nach einem der Ansprüche 4 oder 5,
**dadurch gekennzeichnet, dass** der Ruß eine Iodzahl gemäß ASTM D 1510 zwischen 5 und 20 g / kg und eine DBP-Zahl gemäß ASTM D 2414 zwischen 25 und 70 cm³ / 100g besitzt.

## Claims

1. Rubber-sprung rail vehicle wheel comprising a current bridge made of metal and an elastic layer between the wheel tire made of metal and the wheel disc made of metal, **characterized in that** the elastic layer is constructed from a rubber mixture containing at least the following constituents:
- 80 to 100 phr of at least one natural rubber (NR) and
- at least one silica and
- at least one silane and
- 20 to 90 phr of zinc oxide (ZnO).

2. Rubber-sprung rail vehicle wheel according to Claim 1, **characterized in that** the rubber mixture contains 20 to 100 phr of at least one silica.

3. Rubber-sprung rail vehicle wheel according to Claim 1 or 2, **characterized in that** the rubber mixture contains 10 to 15 phr of at least one silane.

4. Rubber-sprung rail vehicle wheel according to any of Claims 1 to 3, **characterized in that** the rubber mixture additionally contains at least one carbon black.

5. Rubber-sprung rail vehicle wheel according to any of Claims 1 to 3, **characterized in that** the amount of carbon black is between 5 and 50 phr of carbon black.

6. Rubber-sprung rail vehicle wheel according to either of Claims 4 or 5, **characterized in that** the carbon black has an iodine number according to ASTM D 1510 between 5 and 20 g/kg and a DBP number according to ASTM D 2414 between 25 and 70 cm³/100 g.

## Revendications

1. Roue de véhicule ferroviaire à suspension en caoutchouc, présentant un pont électrique en métal et une couche élastique entre le bandage de roue en métal et le disque de roue en métal, **caractérisée en ce que** la couche élastique est réalisée en un mélange de caoutchouc, qui contient au moins les ingrédients suivants:
- 80 à 100 pcc d'au moins un caoutchouc naturel (NR), et
- au moins un acide silicique et
- au moins un silane et
- 20 à 90 pcc d'oxyde de zinc (ZnO).

2. Roue de véhicule ferroviaire à suspension en caoutchouc selon la revendication 1, **caractérisée en ce que** le mélange de caoutchouc contient 20 à 100 pcc d'au moins un acide silicique.

3. Roue de véhicule ferroviaire à suspension en caoutchouc selon une revendication 1 ou 2, **caractérisée en ce que** le mélange de caoutchouc contient 10 à 15 pcc d'au moins un silane.

4. Roue de véhicule ferroviaire à suspension en caoutchouc selon l'une quelconque des revendications 1 à 3, **caractérisée en ce que** le mélange de caoutchouc contient en outre au moins une suie.

5. Roue de véhicule ferroviaire à suspension en caoutchouc selon l'une quelconque des revendications 1 à 3, **caractérisée en ce que** la quantité de suie vaut entre 5 et 50 pcc de suie.

6. Roue de véhicule ferroviaire selon une des revendications 4 ou 5, **caractérisée en ce que** la suie possède un indice d'iode selon ASTM D 1510 compris entre 5 et 20 g/kg et un indice d'absorption DBP selon ASTM D 2414 compris entre 25 et 70 cm³ / 100 g.
